# EUROPÄISCHE PATENTSCHRIFT

(11) **EP 1 455 959 B1**
(45) Veröffentlichungstag und Bekanntmachung des Hinweises auf die Patenterteilung: **05.10.2005**
(21) Anmeldenummer: 02776818.3
(22) Anmeldetag: 14.10.2002
(51) Int. Cl.: B07C 3/14

(54) **VERFAHREN UND VORRICHTUNG ZUR BEARBEITUNG VON POSTSENDUNGEN**
METHOD AND DEVICE FOR PROCESSING MAIL
PROCEDE ET DISPOSITIF DE TRAITEMENT D'ENVOIS POSTAUX

(30) Priorität: 15.10.2001 DE 10150560
(43) Veröffentlichungstag der Anmeldung: 15.09.2004
(73) Patentinhaber: Deutsche Post AG, 53113 Bonn (DE)
(72) Erfinder: TEICHGRÄBER, Volker, 90766 Fürth (DE); ISRAEL, Gerhard, 34317 Habichtswald (DE); HEMMERLING, Jörg, 66386 St. Ingbert (DE); GRUPE, Bernd, 64846 Gross-Zimmern (DE)
(74) Vertreter: Jostarndt, Hans-Dieter
(86) Internationale Anmeldenummer: PCT/DE2002/003856
(87) Internationale Veröffentlichungsnummer: WO 2003/035282

(56) Entgegenhaltungen:
- EP-A- 0 424 728
- WO-A-00/00300
- WO-A-01/58603
- WO-A-97/11790
- FR-A- 2 811 100
- US-A- 5 703 783

## Beschreibung

Die Erfindung betrifft ein verfahren zur Bearbeitung von Postsendungen.

Die Erfindung betrifft ferner eine für die Durchführung des Verfahrens geeignete Vorrichtung.

Ein gattungsgemäßes Verfahren ist aus der Internationalen Patentanmeldung WO 98/17405 A1 bekannt. Bei diesem Verfahren werden aus einem Abbild der Sendungsoberfläche der Adressblock und weitere Zustellungsvermerke bestimmt. Unter Einsatz eines System zur optischen Zeichenerkennung und gegebenenfalls eines Videodekodiersystems wird die Adresse bestimmt, die nachfolgend mit in einer Datenbank gespeicherten gültigen Adressen verglichen und falls notwendig korrigiert wird; sie korrekte Adresse wird dann auf die Sendungen aufgebracht. Während der Bearbeitung werden die Sendungen in einer Verzögerungsstrecke physikalisch gepuffert.

Die Internationale Patentanmeldung WO-A-00/00300 offenbart ebenfalls ein Verfahren zur Bearbeitung von Postsendungen, bei dem erste Adressdaten ermittelt und mit in einer Datenbank gespeicherten Adressdaten verglichen werden, um den Postsendungen neue, unter Umständen korrigierte Adressdaten zuzuordnen oder die Postsendungen mit einem Fehlercode zu versehen, falls dies nicht gelingt. Während der Bearbeitung befinden sich die Postsendungen auf einer Förderstrecke.

Die internationale Patentanmeldung WO-A-01/58603 betrifft eine Maschine zur Paketaufgabe mit Selbstbedienung, in welche Postsendungen von einem Kunden eingegeben werden. Die zugehörigen Adressangaben werden vor der endgültigen Eingabe der Sendung anhand von in einer Datenbank gespeicherten Adressen überprüft. Die Sendungen werden dann in einem Fach gespeichert, wobei die ID- Nummer des Fachs zusammen mit einem der Sendung zugeordneten Identifikationscode und mit weiteren die Sendung betreffenden Informationen in einem Computersystem gespeichert wird.

Die US- Patentanmeldung US-A-5,703,783 beschreibt eine Vorrichtung zum Erkennen und Weiterleiten von nicht korrekt adressierten Postsendungen, bei der die Sendungen, deren Adresse nach einem Vergleich mit in einer Datenbank gespeicherten Adressen als nicht mehr gültige Adresse erkannt wurde, mit einer Identifikationsnummer versehen werden, anhand derer diese Sendungen einer weiteren Bearbeitung zugeführt werden. Bei dieser weiteren Bearbeitung werden die zuvor gespeicherten (alten) Adressinformationen anhand des Identifikationscodes aufgerufen und die neuen Adressinformationen werden ermittelt, während sich die Sendungen in einer Verzögerungsstrecke befinden. Nachfolgenden wird die neue Adresse auf die Sendungen aufgebracht.

Die internationale Patentanmeldung WO-A-97/11790 betrifft ein Verfahren zum Lesen von auf einem Stückgut befindlichen Informationen, wobei diese Informationen die Zieladresse und einen Identifikationscode enthalten und das Stückgut auf einer Förderstrecke transportiert wird. Bei dem Verfahren werden diese Informationen erfasst und erkannt, die Zieladresse wird anhand von in einer Datenbank gespeicherten Adressangaben überprüft und gegebenenfalls korrigiert und alle Informationen werden, als vereinheitlichter Stückgut-Bericht, in einer Datenbank gespeichert oder auf das Stückgut aufgebracht.
Falls die richtige Zieladresse nicht automatisiert bestimmt werden kann, werden aufgenommene Bilder mit den Adressinformationen über einen Server an Bearbeitungsplätze übermittelt, an denen die Adresse durch das Personal gelesen und manuell die korrigierte Adresse eingegeben wird.

Die dem aufgeführten Stand der Technik entsprechenden Verfahren, bei den Adressinformationen eingelesen, überprüft und gegebenenfalls geändert werden, benutzen eine Verzögerungsstrecke auf der Sendungen, welche sich in Bearbeitung befinden, gepuffert werden. Damit ergeben sich insbesondere durch unter Umständen sehr unterschiedliche Bearbeitungszeiten Probleme und Nachteile für diese Verfahren. So verzögern etwa Sendungen deren Bearbeitung sehr lange dauert entweder den gesamten Ablauf, oder diese Sendungen müssen aussortiert und einem gesonderten Behandlung zugeführt werden.

Der Erfindung liegt daher Aufgabe zugrunde, ein Verfahren zu schaffen, mit dem eine einfachere und flexiblere Behandlung von Postsendungen ermöglicht wird.

Erfindungsgemäß wird diese Aufgabe dadurch gelöst, dass ein Verfahren zur Bearbeitung von Postsendungen geschaffen wird, das die folgenden Schritte aufweist:
a) Erfassen von auf wenigstens einer Oberfläche der Postsendungen befindlichen Informationen und Aufbringen eines maschinenlesbaren Identifikationscodes auf die Postsendungen,
b) Übermitteln der erfassten Informationen und des zugehörigen Identifikationscodes an einen Schnittstellenrechner und Speichern der erfassten Informationen und des zugehörigen Identifikationscodes.
c) Zugreifen auf die gespeicherten Daten und Ermitteln von Adressangaben aufgrund der erfassten und gespeicherten Informationen,
d) Vergleichen der ermittelten Adressangaben mit in einer Datenbank vorhandenen Adressangaben,
e) Zuordnen der ermittelten Adressangaben zu neuen Adressangaben anhand des durchgeführten Vergleichs,
f) Übermitteln der zugeordneten neuen Adressangaben und des zugehörigen Identifikationscodes an den Schnittstellenrechner,
g) Erfassen des auf die Postsendungen aufgebrachten Identifikationscodes und Aufbringen der neuen Adressangaben auf die Postsendungen, wobei die neuen Adressangaben in Abhängigkeit von dem Identifikationscode aufgebracht werden.

Ein Beispiel für ein Aufbringen der richtigen Adressangaben ist eine unmittelbare Bedruckung der Postsendung. Es ist jedoch auch möglich, zunächst ein Medium, beispielsweise ein Etikett, zu bedrucken und anschließend auf die Postsendung aufzubringen. Der Begriff "Adressangaben" ist in keiner Weise einschränkend zu verstehen und umfasst insbesondere alle Darstellungen von für eine Sortierung, einen Transport oder eine Zustellung der Postsendung verwendbaren Angaben in eine optisch erkennbare und/oder maschinenlesbare Form.

Eine besonders vorteilhafte Ausführungsform des Verfahrens zeichnet sich dadurch aus, dass die Bearbeitung der Postsendungen in einem zweistufigen Verfahren erfolgt, wobei die Postsendungen bereits in der Quellregion vollständig codiert und in einem ersten Sortierschritt nach Zielregionen grob sortiert werden und dann im Zielgebiet in einem weiteren Sortiervorgang in kleinere Einheiten sortiert werden.

Ferner ist es zweckmäßig, dass die neuen Adressangaben in codierter Form auf die Postsendungen aufgebracht werden.

Außerdem ist es vorteilhaft, dass die Adressangaben als Barcode auf die Postsendung aufgebracht werden.

Bestandteil der Erfindung ist ein Nachadressierverfahren, das vorteilhafte, im Folgenden näher zu beschreibende Merkmale aufweist.

Die Erfindung umfasst insbesondere alle Verfahren zur Bearbeitung von Postsendungen mit Anschriftenmängeln für das Inland, die bisher weder maschinenlesbar waren, noch über Videocodierung, noch manuell sortiert werden konnten.

Anschriftenmängel sind beispielsweise:
- fehlende, alte oder falsche Postleitzahl
- nicht korrekt geschriebene Orts- oder Straßenbezeichnung
- alte Orts- oder Straßenbezeichnung
- fehlende oder falsche Postfachnummer
- fehlende Straßenbezeichnung und/oder fehlende Hausnummer
- Sonderfälle (Empfänger ohne konkrete Orts- und/oder Straßenbezeichnung und/oder Postfachangabe)

Besonders bevorzugte Ausführungsformen der Erfindung stellen durch eine geeignete Codierung mittels Zielcode (herkömmlicher Barcode oder zum Beispiel 4-state Code) und/oder durch eine maschinell aufgedruckte Postleitzahl in Klarschrift oder durch ein entsprechendes manuell oder maschinell aufgebrachtes Etikett mit der Anschrift in Klarschrift oder in verschlüsselter Form sicher, dass die Postsendungen maschinell sortiert werden können und somit im Zielgebiet besondere effektiv verteilt werden können, beispielsweise indem die Postsendungen dem richtigen Zuatellbezirk, der richtigen Zustellbezirksgruppe oder dem richtigen Postfachschrank oder dem richtigen Empfänger zugeführt werden.

Bei vorhandener Hausnummer ermöglicht die Erfindung eine maschinelle Sortierung der Postsendungen nach Gangfolge.

Der Codierung, beziehungsweise der Etikettierung geht eine Anschriftenermittlung voraus, bei der die richtige Postleitzahl, zum Beispiel die Zustell-Postleitzahl, die Postfach-Postleitzahl oder die (Gruppen)-Großempfänger-Postleitzahl, aus den erkennbaren Adressbestandteilen mittels verknüpfter Dateien aus den Daten einschließlich einer Umsetzdatei (Zuordnung alte Postleitzahlen zu Postorten) gefunden wird. Ferner werden die weiteren 6 Stellen des eigentlichen Zielcodes (Straßencode) und gegebenenfalls 2 zusätzliche Stellen ermittelt.

Die Erfindung umfasst ferner eine Vorrichtung zur Bearbeitung von Postsendungen.

Erfindungsgemäß zeichnet sich diese Vorrichtung dadurch aus, dass sie die folgenden Bestandteile aufweist:
a) Ein Mittel zum Erfassen von auf wenigstens einer Oberfläche der Postsendungen befindlichen Informationen und einen Drucker zum Aufbringen eines maschinenlesbaren Identifikationscodes auf die Postsendungen,
b) Einen Schnittstellenrechner mit einem Mittel zum Speichern der erfassten Informationen,
c) Bearbeitungsplätze mit einem Mittel zum Zugreifen auf die gespeicherten erfassten Informationen und die zugehörigen gespeicherten Identifikationscodes und mit einem Mittel zum Ermitteln von Adressangaben aufgrund der gespeicherten erfassten Informationen,
d) eine Datenbank mit Adressangaben und ein Mittel zum Vergleichen der ermittelten Adressangaben mit den in der Datenbank vorhandenen Adressangaben,
e) ein Mittel zum Zuordnen der ermittelten Adressangaben zu neuen Adressangaben anhand eines vergleichs der ermittelten Adressangaben mit den in der Datenbank vorhandenen Adressangaben,
f) ein Mittel zum Übermitteln der neuen Adressangaben und des Identifikationscodes von den Bearbeitungsplätzen an den Schnittstellenrechner,
g) ein Mittel zum Erfassen des auf die Postsendungen aufgebrachten Identifikationscodes und ein Mittel zum Aufbringen der neuen Adressangaben auf die Postsendungen, wobei das Mittel zum Aufbringen die neuen Adressangaben in Abhängigkeit des Identifikationscodes aufbringt.

Weitere vorteile, Besonderheiten und zweckmäßige Weiterbildungen der Erfindung ergeben sich aus den Unteransprüchen und der nachfolgenden Darstellung bevorzugter Ausführungsbeispiele der Erfindung anhand der Zeichnungen. Von den Zeichnungen zeigen
- Fig. 1: eine Prinzipdarstellung einer Ausführungsform der Erfindung, die sich durch eine lokale Datenhaltung auszeichnet, mit der dazu geeigneten Vorrichtung sowie den zugehörigen Abläufen.
- Fig. 2: eine Prinzipdarstellung einer Ausführungsform des Verfahrens, die sich durch eine Datenhaltung auf einem Server auszeichnet, mit der dazu geeigneten Vorrichtung sowie den zugehörigen Abläufen. Die Sendungen liegen dem Bearbeiter physisch vor.
- Fig. 3: eine Prinzipdarstellung einer Ausführungsform des Verfahrens, die sich durch eine Datenhaltung auf einem Server und eine Anbindung an eine Sortieranlage auszeichnet, mit der dazu geeigneten Vorrichtung sowie den zugehörigen Abläufen. Die Sendungen liegen dem Bearbeiter physisch nicht vor.
- Fig. 4: die in dem Verfahren vorzugsweise verwendeten Codearten.

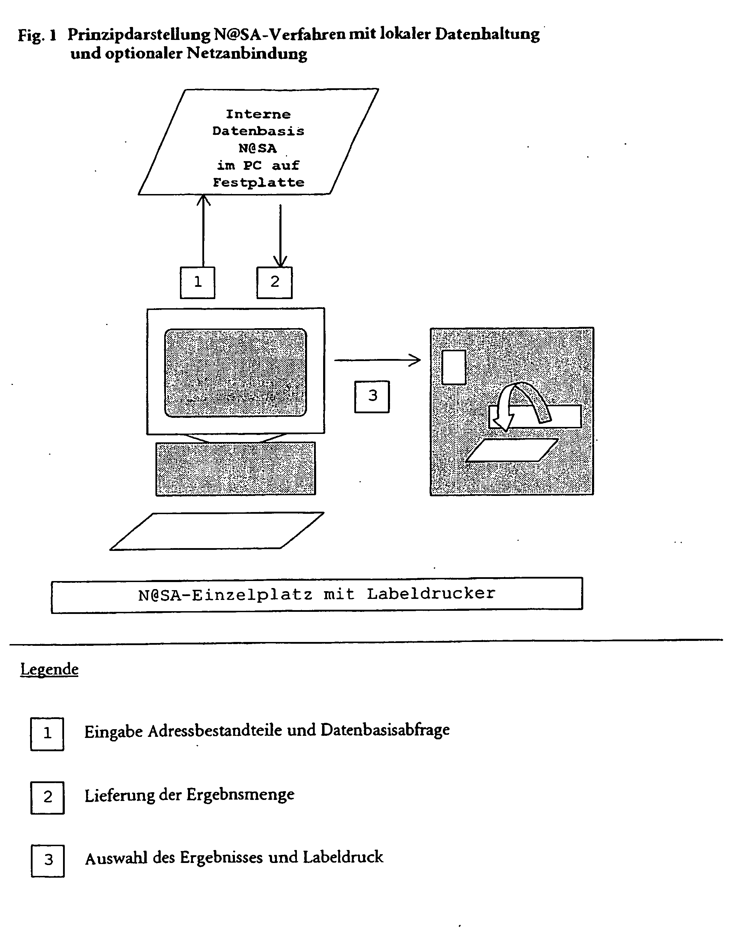

In der in Fig. 1 dargestellten Ausführungsform erfolgt die eine Bearbeitung von physisch in einer Bearbeitungsstation vorhandenen Postsendungen. Bei dieser Ausführungsform werden die auf den Postsendungen befindlichen Adressbestandteile 1 an eine interne Datenbasis übermittelt. Die interne Datenbasis liefert aufgrund der übermittelten Adressbestandteile eine Ergebnisadresse 2.

Ferner wird untersucht, ob mehrere Adressen ermittelt wurden. Für diesen Fall erfolgt eine Auswahl aus den ermittelten Adressen.

Nachfolgend werden bevorzugte Verfahrensschritte für die Durchführung der Erfindung erläutert. Die Verfahrensschritte können sowohl einzeln eingesetzt als auch miteinander kombiniert werden, wodurch sich die Wirksamkeit der einzelnen Verfahrensschritte in einem besonders überraschenden Maß weiter erhöht.

Ein Verfahrensbestandteil, der dazu führt, dass mit verhältnismäßig geringem Aufwand die Wirksamkeit des Verfahrens erhöht wird, ist eine Implementierung einer spezialisierten Lese-Software.

Ein Bestandteil dieses Programms ist eine Umsetzdatei zur Umwandlung bisheriger Adressen in neue Adressen.

Mittels der Umsetzdatei, die in das sogenannte Wörterbuch der Sortieranlage übernommen wird, lassen sich teilweise alte Postleitzahlen den jetzt gültigen Postorten zuordnen. Dadurch sind bei entsprechend guter Lesequalität die Postorte genügend abgesichert, so dass die Sortiermaschine in der Lage ist, die Postsendungen unter Zuhilfenahme der Eingangs-Verteilinformationen (Straße, gegebenenfalls Hausnummer) einzusortieren.

Der jeweilige Zielcode kann auf verschiedene Weise aufgebracht werden, beispielsweise durch verschiedene Druckverfahren. Ein Bedrucken mit einem fluoreszierenden Farbstoff ist besonders vorteilhaft, da hierdurch eine optische Erfassung des Zielcodes bei einem nachfolgenden Sortiervorgang besonders einfach und zuverlässig erfolgen kann.

Der Zielcode kann verschiedene Gestalt haben, beispielsweise die vollständigen Adressangaben enthalten, was vorzugsweise durch den Einsatz eines 11 bis 13-stelligen Zielcodes erfolgt mit zusätzlichem Aufdruck der Postleitzahl in Klarschrift.

Es ist jedoch möglich, an Stelle dieses Zielcodes einen anderen Zielcode einzusetzen, beispielsweise statt des fluoreszierenden Barcodes ein Label mit 4-state-Code, der ebenfalls die erforderlichen Zielinformationen in verschlüsselter Form enthält, und automatisch, vorzugsweise in Form eines Labels, auf die Postsendung aufgebracht wird. Auf dem Label steht vorzugsweise zusätzlich die Postleitzahl in Klarschrift.

Neben dem automatisierten Einsatz des Verfahrens in Bearbeitungsmaschinen, die vorzugsweise in den normalen Bearbeitungsvorgang der Postsendungen integriert sind, können einzelne Postsendungen auch separat erfasst werden, beispielsweise an speziellen Bearbeitungsplätzen.

Vorzugsweise bestehen die Einzelplätze aus einem PC mit Bildschirm und Tastatur sowie einem Etikettendrucker als zusätzlicher Ausgabeeinheit, die über das Programm angesteuert wird und ein Klarschrift- oder alternativ ein 4-state-Label erzeugt.

Nachfolgend wird die Implementation der Verfahrensschritte an dem Beispiel eines zweiteiligen Computersystems erläutert. Die Erfindung ist jedoch nicht auf den dargestellten, besonders vorteilhaften Fall eines zweiteiligen Computersystems beschränkt.

Grundsätzlich eignet sich jeder Computer für die Durchführung der Erfindung.

Der Begriff "Computer" ist in keiner Weise einschränkend zu verstehen. Es kann sich hierbei um eine beliebige, zur Durchführung von Berechnungen geeignete Einheit handeln, beispielsweise eine Workstation, einen Personalcomputer, einen Microcomputer oder eine zur Durchführung von Berechnungen und/oder Vergleichen geeignete Schaltung.

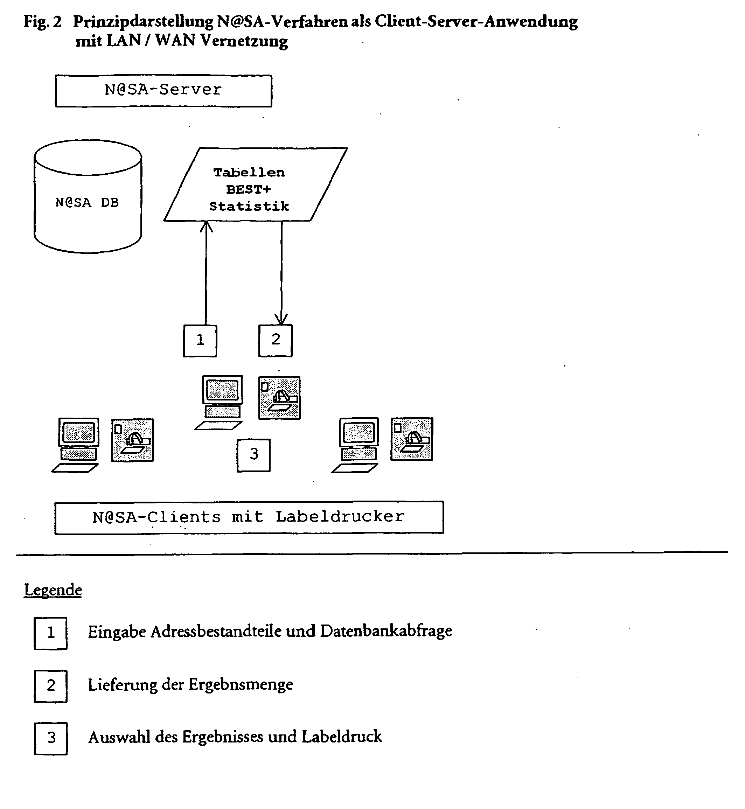

Eine besonders bevorzugte Ausführungsform der Erfindung mit einer Client-Server-Implementation ist in Fig. 2 dargestellt.

Bei dieser Ausführungsform erfolgt der Einsatz der Datenbank auf einem Server, der die dargestellten Funktionen für mehrere Bearbeitungsplätze übernimmt.

Auch hierbei erfolgt wieder eine Erfassung der Adressbestandteile 1, eine Datenbankabfrage, eine Lieferung von Ergebnisdaten 2, sowie die Bereitstellung der gegebenenfalls ausgewählten Ergebnisdaten 3 für einen Druckvorgang, beispielsweise das Bedrucken von Etiketten.

Der Client-Teil ist in einer plattformunabhängigen Programmiersprache realisiert. Die Verwendung einer anderen Programmiersprache ist grundsätzlich möglich. Über eine Eingabemaske werden die erkennbaren Teile der Anschrift eingegeben. Danach wird vom Client eine Datenbankanfrage an den Server gestellt.

Bei dem Server handelt es sich um einen leistungsstarken Rechner mit mehreren Prozessoren und einem großen Hauptspeicher. Dies ist notwendig, um sehr schnelle Zugriffszeiten zu realisieren.

Datenbasis bilden die Dateien aus einer geeigneten Datenbankanwendung, die beispielsweise Postleitdaten enthält. Auch das Design der Datenbank ist auf einen schnellen Zugriff ausgelegt. Dies bedeutet jedoch, dass auch viele Daten redundant gehalten werden müssen.

Die Datenzugriffe sind durch eine geeignete Datenbankanwendung, beispielsweise PL/SQL realisiert. Über eine PL/SQL-Prozedur bekommt der Client seine Ergebnismenge in Form von Datensätzen vom Server geliefert. Die Ergebnismenge wird am Client sortiert und in einer Auswahlliste angezeigt. Sie kann durch weitere Eingaben lokal eingeschränkt werden.

Eine Besonderheit des Programms besteht darin, dass in einer besonderen Liste alle Postfachinhaber und Großempfänger mit den entsprechenden Daten für die Ausgabe (Postfach, Postleitzahl) automatisch angezeigt werden, wenn deren Hausanschrift den abgefragten Daten entsprechen. Darüber hinaus kann durch eine modifizierte Abfrage auf eine weitere Liste bestimmbarer Empfänger zugegriffen werden.

Ein Entscheidungsmodul oder eine Bedienkraft entscheiden, welcher der angezeigten Datensätze (aus der normalen oder zum Beispiel aus der besonderen Auswahlliste) jeweils in Frage kommt. Das Entscheidungsmodul oder die Bedienkraft wählen diesen Datensatz aus und betätigen die Drucktaste. Über den lokal angeschlossenen Etikettendrucker wird das entsprechende Etikett mit der richtigen Anschrift gedruckt und auf die Postsendung geklebt. Ein Entscheidungsmodul ist ein Programmmodul, das seine Umgebung beobachten und weitgehend autonom handeln kann. Hierzu enthält das Entscheidungsmodul Informationen über die zu berücksichtigenden Parameter und Handlungsanweisungen über die Vorgehensweise. Vorzugsweise ist das Entscheidungsmodul in der Lage, möglichst weitgehend autonom zu handeln.

Danach kann die Postsendung wieder in den normalen Abgangs-Postsendungsstrom gebracht werden. Die Postsendung ist maschinenlesbar bis einschließlich der maschinellen Gangfolgesortierung im Zustellstützpunkt.

Weitere Besonderheiten der NASA-Einzelplätze sind:
- Automatisches Anlegen von Statistiksätzen einschließlich der Erfassung der effektiven Bearbeitungszeit, Verdichten der Statistiksätze und Protokollausgabe
- einfache, auf den Anwendungszweck optimierte Bedieneroberfläche
- Anbindung der Plätze über das Postnetz

Statt physisch vorliegender Sendungen lassen sich auch Anschriften bearbeiten, welche in elektronischer Form vorliegen.

So können beispielsweise über die Maschinenplätze maschinenfähige Postsendungen bearbeitet werden, die mittels einer Sortieranlage, vozugsweise der Standard-Sortieranlage zu verteilen sind. Das Client-Programm ist das gleiche wie bei den Einzelplätzen. Über eine INI-Datei wird gesteuert, welcher Modus aufgerufen wird. Die Eingabemaske unterscheidet sich bei den beiden Modellen. Da bei den Maschinenplätzen die Postsendungen nicht stofflich vorliegen, werden zusätzlich zur Eingabemaske die Bilder der Postsendungen auf dem Monitor angezeigt.

Um die Postsendungsbilder auf der Maske anzuzeigen, sollte über das Inhouse-Netz bzw. das Postnetz und einen Schnittstellenrechner (SSR) eine Verbindung zur Sortieranlage hergestellt werden.

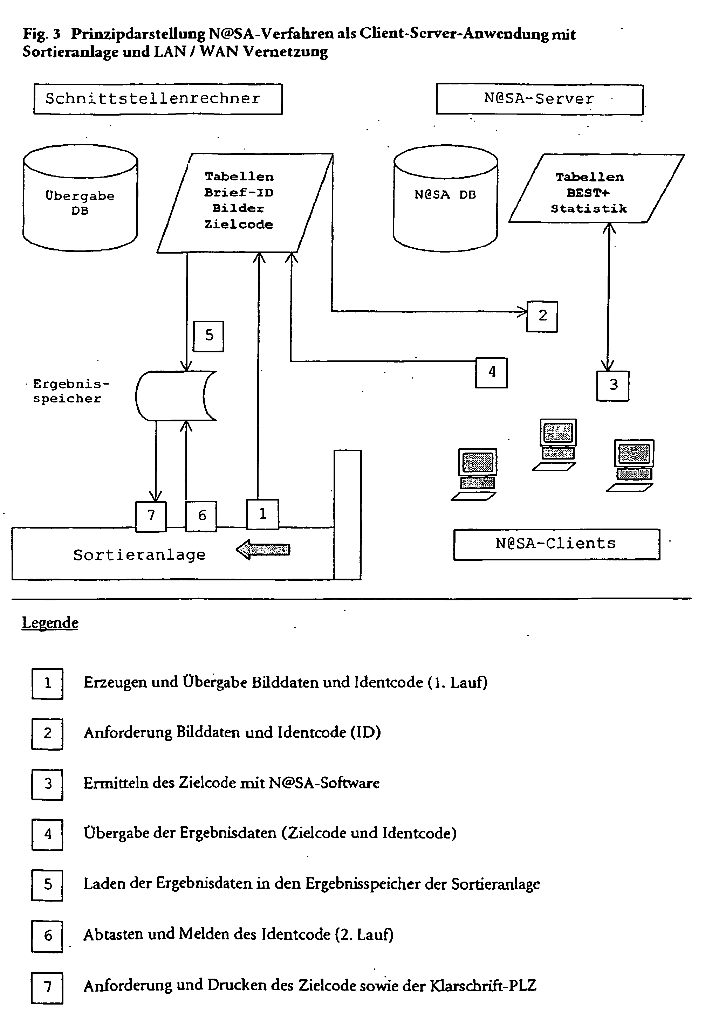

Eine hierfür geeignete Vorrichtung ist beispielhaft in Fig. 3 dargestellt. Diese Abbildung zeigt einen Einsatz der Erfindung in einem Briefzentrum. Obwohl sämtliche Ausführungsformen der Erfindung sich für einen Einsatz in Briefzentren und für eine massenhafte Verarbeitung von Postsendungen eignet, ist diese Ausführungsform für eine Massenverarbeitung von Postsendungen besonders bevorzugt.

Bei dieser Ausführungsform erfolgt eine Ermittlung und eine Übertragung der auf der Postsendung befindlichen Informationen 1 an einen Schnittstellenrechner. Der Schnittstellenrechner enthält Speicherplätze zur Zuordnung der jeweils erfassten Sendungsbilder.

Der Schnittstellenrechner ist mit einem Server verbunden. Der Server hat vorzugsweise den zuvor dargestellten Aufbau und ermöglicht eine Zuordnung von korrigierten Adressangaben anhand der auf der Oberfläche der Postsendungen befindlichen Informationen.

Das Ermitteln des Zielcodes 3 erfolgt anhand der ermittelten Bilddaten und eines Einsatzes einer Datenbankabfrage, beziehungsweise einer Datenbasisabfrage. Diese Abfragen erfolgen als automatisierte Verfahrensschritte.

Die ermittelten Ergebnisdaten 4 mit den korrigierten Adressangaben werden anschließend an den Schnittstellenrechner übermittelt.

Der Schnittstellenrechner ist mittelbar oder unmittelbar mit der Sortieranlage verbunden.

Im dargestellten Fall übermittelt der Schnittstellenrechner die Ergebnisdaten in einen Ergebnisspeicher 5 der Sortieranlage.

Eine Zuordnung der Postsendungen zu den korrigierten Adressangaben erfolgt vorzugsweise durch Erfassung eines die Postsendung identifizierenden Identifikationscodes 6.

Vorzugsweise wurde der Identifikationscode 6 auf die Postsendung aufgebracht, um eine Zuordnung der neuen Adresse zu der richtigen Postsendung zu ermöglichen.

Durch den Identifikationscode 6 ist es möglich, den Postsendungen jeweils die zugehörigen neuen Adressangaben zuzuordnen. In einer besonders bevorzugten Ausführungsform erfolgt dies dadurch, dass auf den Postsendungen aufgedruckte Identifikationscodes 6 erfasst werden, und dass die erfassten Identifikationscodes 6 mit gespeicherten, zu den Adressangaben gehörigen Angaben über die Identifikationscodes 6 verglichen werden, und dass aufgrund des Vergleichs die Postsendungen identifiziert werden. Die identifizierten Postsendungen werden anschließend mit der neuen Adressangabe und/oder einem die Adressangabe enthaltenen Code bedruckt. Die Bedruckung kann unmittelbar auf der Postsendung erfolgen oder durch Bedruckung eines anschließend auf die Postsendung aufgedruckten Etiketts. Die neuen Adressangaben enthalten vorzugsweise eine Postleitzahl für die Weitersortierung der Postsendung.

Es ist zweckmäßig, den Identifikationscode mit einer geringeren Datenbreite zu versehen als den Zielcode, da die Identifikationscodes vorzugsweise nur bei einer temporären Bearbeitung der Postsendungen eingesetzt werden.

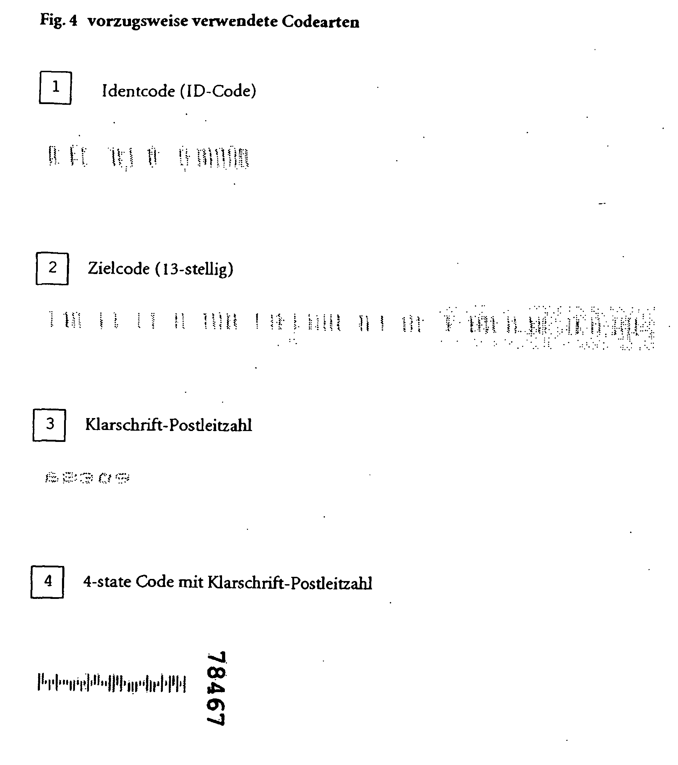

Ein derartiger Identifikationscode ist in Teilbild 1 von Fig. 4 dargestellt.

In Teilbild 2 von Fig. 4 ist ein Beispiel für einen verwendeten Zielcode dargestellt. Der dargestellte Zielcode ist 13-stellig. Es ist jedoch auch möglich, einen Zielcode mit einer anderen Datenbreite einzusetzen, beispielsweise durch Verwendung eines 11-stelligen Zielcodes. Auf die Anzahl der Stellen des Zielcodes kommt es für die Durchführung des Verfahrens nicht an. Es ist beispielsweise auch möglich, einen kürzeren Zielcode zu verwenden, der lediglich einzelne, für die Weiterverarbeitung der Postsendungen, insbesondere für ihre Sortierung und/oder Verteilung erforderliche Angaben enthält.

Um neben der grundsätzlich bevorzugten automatischen Bearbeitung der Postsendungen auch eine manuelle Bearbeitung, beispielsweise für einen Einsatz in Notfällen zu ermöglichen, ist es zweckmäßig, dass einzelne der neuen, korrigierten Adressangaben auch in Klarschrift auf die Postsendungen aufgedruckt werden. Bei dem dargestellten Ausführungsbeispiel ist die Postleitzahl in einem sowohl von einem Bediener erkennbaren als auch von einem automatischen Lesegerät erfassbaren Klarschrift gedruckt. Eine derartige Klarschriftdarstellung einer Postleitzahl findet sich in Teilbild 3 von Fig. 4.

Eine andere Ausführungsform eines Adresscodes ist in Teilbild 4 von Fig. 4 dargestellt. Bei dieser Ausführungsform handelt es sich um einen 4-state-Code mit einer Klarschriftwiedergabe der Postleitzahl.

Die dargestellten Ausführungsbeispiele von Adresscodes sind lediglich beispielhaft zu verstehen und können von Fachleuten auf dem Gebiet der Verarbeitung von Postsendungen jeweils an die Bedürfnisse von Postversendungs- und Postbearbeitungsunternehmen angepasst werden. Die dargestellten Ausführungsbeispiele eignen sich insbesondere für eine massenhafte, möglichst voll automatisierte Bearbeitung von Postsendungen in größeren Postversendungsunternehmen.

Mit Hilfe der dargestellten Vorrichtung kann das Verfahren vorzugsweise wie folgt durchgeführt werden:
- Die Bilder von Postsendungen, welche nicht endbearbeitet werden, werden durch die Sortieranlage aufgezeichnet und die Sendungen mit einem Identcode (ID-Code) versehen. Danach werden die Postsendungen abgestapelt und für einen zweiten Durchlauf bereit gehalten.
- Die Postsendungsbilder (z.B. im TIF-Format) und der ID-Code werden von der Sortieranlage zu einem Schnittstellenrechner (SSR) übertragen. Auf diesen SSR greift auch das NASA-Client-Programm zu. Über eine geeignete Datenbankroutine, beispielsweise PL/SQL-Prozedur wird dem Client jeweils das älteste Postsendungsbild mit den Bildbegleitdaten und dem zugehörige ID-Code angeboten. Das Bild wird in der Maske angezeigt.
- Das Entscheidungsmodul oder die Ermittlungskraft versuchen nun, die richtige Anschrift zu ermitteln. Dies geschieht analog dem Einzelplatzverfahren. Ist die richtige Anschrift ermittelt, wird der ID-Code mit dem zugehörigen Zielcode an den SSR zurückübertragen.
- Die ermittelten Postsendungen werden in einem zweiten Durchlauf in die Sortieranlage eingegeben. Hier wird der ID-Code gelesen, der zugehörige Zielcode sowie die Postleitzahl in Klarschrift auf die Postsendung aufgebracht. Danach ist die Postsendung maschinenlesbar bis einschließlich der maschinellen Gangfolgesortierung im Zustellstützpunkt.

Ferner ist es zweckmäßig, auch die nachfolgend dargestellten Funktionen in den Bearbeitungsvorgang zu integrieren, um die Effizienz der Bearbeitung weiter zu erhöhen:
- Zoomfunktion zum besseren Erkennen, z.B. der Anschrift
- Drehen kopfstehender Postsendungsbilder auf dem Monitor um 180 Grad.
- Erzeugen eines fiktiven Zielcodes für Postsendungen in das Ausland oder andere Postsendungen, die in besondere Fächer der Sortieranlage zu verteilen sind.
- Erzeugen einer zusätzlichen Kennung für Postsendungen mit Briefzusatzleistungen oder für Zusätze bei Hausnummern.
- Anzeige der noch zu bearbeitenden Postsendungen auf dem Monitor.

Anbindung der Plätze über das Postnetz.
- Automatisches Anlegen von Statistiksätzen einschließlich der Erfassung der effektiven Bearbeitungszeit, Verdichten der Statistiksätze und Protokollausgabe

Ein Einsatz auf anders gestalteten Arbeitsplätzen, beispielsweise mit einem PC oder mit einem Terminal eines Großrechnernetzes, kann auf entsprechende Weise erfolgen, wobei die jeweilige Auswahl in Abhängigkeit von den zur Verfügung stehenden Rechnerleistungen erfolgt und den jeweiligen Erfordernissen angepasst werden kann.

Zentralisierte Lösungen haben den Vorteil, dass die Daten nur an wenigen Stellen bereitgehalten werden müssen und daher leichter aktualisiert werden können. Jedoch ist hierbei die Bearbeitungszeit der Einzelvorgänge erhöht.

Eine Bearbeitung auf Grundlage von lokal gespeicherten Daten ermöglicht hingegen eine Erhöhung der Datenverarbeitungsgeschwindigkeit. So ist bei den Einzelplätzen alternativ zur Client-Server-Anwendung eine Anwendung realisiert, bei der die Datenbasis als Quasi-Datenbank auf der Festplatte gespeichert ist.

Bei der Auswahl der jeweils einzusetzenden EDV-Systeme bestehen keine Beschränkungen, da die Erfindung unabhängig von dem jeweils eingesetzten EDV-System erfolgt.

Die Darstellungen zu den Einzelheiten der Datenverarbeitung sind daher beispielhaft zu verstehen und können ohne Einschränkungen auf andere Datenverarbeitungsanlagen übertragen werden.

### Bezugszeichenliste:

- 1: Adressbestandteile
- 2: Ergebnisadresse
- 3: Adressangaben
- 4: Adressangaben
- 5: Ergebnisspeicher
- 6: Identifikationscode
- 7: Adressangaben

## Patentansprüche

1. Verfahren zur Bearbeitung von Postsendungen, das folgende Schritte aufweist:
a) Erfassen von auf wenigstens einer Oberfläche der Postsendungen befindlichen Informationen und Aufbringen eines maschinenlesbaren Identifikationscodes auf die Postsendungen,
b) Übermitteln der erfassten Informationen und des zugehörigen Identifikationscodes an einen Schnittstellenrechner und Speichern der erfassten Informationen und des zugehörigen Identifikationscodes,
c) Zugreifen auf die gespeicherten Daten und Ermitteln von Adressangaben aufgrund der erfassten und gespeicherten Informationen,
d) Vergleichen der ermittelten Adressangaben mit in einer Datenbank vorhandenen Adressangaben,
e) Zuordnen der ermittelten Adressangaben zu neuen Adressangaben anhand des durchgeführten vergleichs,
f) Übermitteln der zugeordneten neuen Adressangaben und des zugehörigen Identifikationscodes an den Schnittstellenrechner,
g) Erfassen des auf die Postsendungen aufgebrachten Identifikationscodes und Aufbringen der neuen Adressangaben auf die Postsendungen, wobei die neuen Adressangaben in Abhängigkeit von dem Identifikationscode aufgebracht werden.

2. Verfahren nach Anspruch 1,
**dadurch gekennzeichnet,**
**dass** die Bearbeitung der Postsendungen in einem zweistufigen Verfahren erfolgt, wobei die Postsendungen in einem ersten Sortierschritt einer Grobsortierung unterzogen werden und davon getrennt in einem weiteren Sortiervorgang in kleinere Einheiten sortiert werden und dass die Erfassung der auf der Oberfläche der Postsendungen befindlichen Informationen und die Umwandlung der auf der Postsendung befindlichen Adressangaben in die neuen Adressinformationen bei dem ersten Sortiervorgang erfolgt.

3. Verfahren nach einem oder beiden der Ansprüche 1 und 2,
**dadurch gekennzeichnet,**
**dass** ermittelt wird, ob die ermittelten Adresaangaben eine erste Postleitzahl enthalten, und dass die erste Postleitzahl in eine zu einer richtigen Adressangabe zugehörige Postleitzahl umgewandelt wird.

4. Verfahren nach einem oder mehreren der vorangegangenen Ansprüche,
**dadurch gekennzeichnet,**
**dass** die neuen Adressangaben in codierter Form auf die Postsendungen aufgebracht werden.

5. Verfahren nach Anspruch 4,
**dadurch gekennzeichnet,**
**dass** die Adressangaben als Barcode auf die Postsendungen aufgebracht werden.

6. Verfahren nach einem oder mehreren der vorangegangenen Ansprüche,
**dadurch gekennzeichnet,**
**dass** die Adressangaben wenigstens teilweise in Klarschrift auf die Postsendungen aufgebracht werden.

7. Verfahren nach einem oder mehreren der vorangegangenen Ansprüche,
**dadurch gekennzeichnet,**
**dass** wenigstens ein Sortiervorgang in Abhängigkeit von den neuen Adressangaben erfolgt.

8. Verfahren nach einem oder mehreren der vorangegangenen Ansprüche,
**dadurch gekennzeichnet,**
**dass** ein Transport der Postsendungen wenigstens abschnittsweise in Abhängigkeit von den neuen Adressangaben erfolgt.

9. Vorrichtung zur Bearbeitung von Postsendungen, die folgende Bestandteile aufweist:
a) Ein Mittel zum Erfassen von auf wenigstens einer Oberfläche der Postsendungen befindlichen Informationen und einen Drucker zum Aufbringen eines maschinenlesbaren Identifikationscodes auf die Postsendungen,
b) Einen Schnittstellenrechner mit einem Mittel zum Speichern der erfassten Informationen.
c) Bearbeitungsplätze mit einem Mittel zum Zugreifen auf die gespeicherten erfassten Informationen und die zugehörigen gespeicherten Identifikationscodes und mit einem Mittel zum Ermitteln von Adressangaben aufgrund der gespeicherten erfassten Informationen,
d) Eine Datenbank mit Adressangaben und ein Mittel zum Vergleichen der ermittelten Adressangaben mit den in der Datenbank vorhandenen Adressangaben,
e) Ein Mittel zum Zuordnen der ermittelten Adressangaben zu neuen Adressangaben anhand eines vergleichs der ermittelten Adressangaben mit den in der Datenbank vorhandenen Adressangaben,
f) Ein Mittel zum Übermitteln der neuen Adressangaben und des Identifikationscodes von den Bearbeitungsplätzen an den Schnittstellenrechner,
g) Ein Mittel zum Erfassen des auf die Postsendungen aufgebrachten Identifikationscodes und ein Mittel zum Aufbringen der neuen Adressangaben auf die Postsendungen, wobei das Mittel zum Aufbringen die neuen Adressangaben in Abhängigkeit des Identifikationscodes aufbringt.

## Claims

1. A method for processing mailpieces that comprises the following steps:
a) detecting information that is present on at least one surface of the mailpieces and applying a machine-readable identification code onto the mailpieces,
b) transmitting the detected information and the appertaining identification code to an interface computer and storing the detected information and the appertaining identification code,
c) accessing the stored data and determining the address information on the basis of the detected and stored information,
d) comparing the detected address information with address information present in a database,
e) associating the detected address information with new address information on the basis of the comparison that has been carried out,
f) transmitting the associated new address information and the appertaining identification code to the interface computer,
g) detecting the identification code applied onto the mailpieces and applying the new address information onto the mailpieces, whereby the new address information is applied as a function of the identification code.

2. The method according to Claim 1, **characterized in that** the mailpieces are processed within the scope of a two-stage process, whereby the mailpieces undergo preliminary sorting in a first sorting step and, separately from this, are sorted into smaller units in another sorting procedure, and **in that** the information present on the surface of the mailpiece is detected and the address information present on the mailpiece is converted into the new address information during the first sorting procedure.

3. The method according to one or both of Claims 1 and 2, **characterized in that** it is ascertained whether the detected address information contains a first postal code, and **in that** the first postal code is converted into a postal code that matches the correct address information.

4. The method according to one or more of the preceding claims, **characterized in that** the new address information is applied onto the mailpieces in coded form.

5. The method according to Claim 4, **characterized in that** the address information is applied onto the mailpieces as a barcode.

6. The method according to one or more of the preceding claims, **characterized in that** the address information is applied onto the mailpiece at least partially in plain text.

7. The method according to one or more of the preceding claims, **characterized in that** at least one sorting procedure is carried out as a function of the new address information.

8. The method according to one or more of the preceding claims, **characterized in that** the mailpieces are transported at least over a segment as a function of the new address information.

9. A device for processing mailpieces that comprises the following components:
a) a means for detecting information that is present on at least one surface of the mailpieces and a printer to apply a machine-readable identification code onto the mailpieces,
b) an interface computer with a means for storing the detected information
c) processing stations with a means for accessing the stored detected information and the appertaining stored identification codes, and with a means for determining address information on the basis of the stored detected information,
d) a database with address information and a means for comparing the detected address information with address information present in the database,
e) a means for associating the detected address information with new address information on the basis of a comparison of the detected address information with the address information that is present in the database,
f) a means for transmitting the new address information and the identification code from the processing stations to the interface computer,
g) a means for detecting the identification code applied onto the mailpieces and a means for applying the new address information onto the mailpieces, whereby said means applies the new address information as a function of the identification code.

## Revendications

1. Procédé pour le traitement d'envois postaux qui comporte les étapes qui suivent :
a) enregistrer des informations se trouvant sur au moins une surface des envois postaux et apposer un code d'identification lisible à la machine sur les envois postaux,
b) transmettre les informations enregistrées et le code d'identification y afférent à un ordinateur d'interface et sauvegarder les informations enregistrées et le code d'identification y afférent,
c) accéder aux données sauvegardées et obtenir des indications d'adresse à partir des informations enregistrées et sauvegardées,
d) comparer les indications d'adresse obtenues avec des indications d'adresse disponibles dans une banque de données,
e) attribuer les indications d'adresse obtenues à de nouvelles indications d'adresse en utilisant la comparaison effectuée,
f) transmettre les nouvelles indications d'adresse attribuées et le code d'identification y afférent à l'ordinateur d'interface,
g) enregistrer les codes d'identification apposés sur les envois postaux et apposer les nouvelles indications d'adresse sur les envois postaux, les nouvelles indications d'adresse étant apposées en fonction du code d'identification.

2. Procédé selon la revendication 1,
**caractérisé en ce**
**que** le traitement des envois postaux se fait dans un procédé à deux étapes, les envois postaux étant soumis à un tri grossier dans une première étape de tri, et dans une autre processus de tri distinct sont triés en de plus petites unités, et que l'enregistrement des informations se trouvant sur la surface des envois postaux et la transformation des indications d'adresse se trouvant sur la surface des envois postaux en nouvelles informations d'adresse se fait lors du premier processus de tri.

3. Procédé selon une ou les deux des revendications 1 et 2,
**caractérisé en ce**
**qu'**il est vérifié si les indications d'adresse obtenues contiennent un premier code postal, et que le premier code postal est transformé en un code postal appartenant à une indication d'adresse correcte.

4. Procédé selon une ou plusieurs des revendications précédentes,
**caractérisé en ce**
**que** les nouvelles indications d'adresse sont apposées sur les envois postaux sous une forme codée.

5. Procédé selon la revendication 4,
**caractérisé en ce**
**que** les indications d'adresse sont apposées sur les envois postaux en tant que code barres.

6. Procédé selon une ou plusieurs des revendications précédentes,
**caractérisé en ce**
**que** les indications d'adresse sont apposées sur les envois postaux au moins en partie sous forme de texte en clair.

7. Procédé selon une ou plusieurs des revendications précédentes,
**caractérisé en ce**
**qu'**au moins un processus de tri se fait en fonction des nouvelles indications d'adresse.

8. Procédé selon une ou plusieurs des revendications précédentes,
**caractérisé en ce**
**qu'**un transport des envois postaux se fait au moins au niveau de sections en fonction des nouvelles indications d'adresse.

9. Dispositif pour le traitement d'envois postaux, qui comporte les éléments qui suivent :
a) un moyen pour enregistrer des informations se trouvant sur au moins une surface des envois postaux et une imprimante pour apposer un code d'identification lisible à la machine sur les envois postaux,
b) un ordinateur d'interface avec un moyen pour sauvegarder les informations enregistrées,
c) des lieux de traitement avec un moyen pour accéder aux informations enregistrées sauvegardées et codes d'identification sauvegardés y afférents, et avec un moyen pour obtenir des indications d'adresse à partir des informations enregistrées sauvegardées,
d) une banque de données avec des indications d'adresse et un moyen pour comparer les indications d'adresse obtenues avec les indications d'adresse contenues dans la banque de données,
e) un moyen pour attribuer les indications d'adresse obtenues à de nouvelles indications d'adresse à partir d'une comparaison des indications d'adresse obtenues avec les indications d'adresse contenues dans la banque de données,
f) un moyen pour transmettre les nouvelles indications d'adresse et le code d'identification y afférent des lieux de traitement vers l'ordinateur d'interface,
g) un moyen pour enregistrer le code d'identification apposé sur les envois postaux et un moyen pour apposer les nouvelles indications d'adresse sur les envois postaux, le moyen pour apposer apposant les nouvelles indications d'adresse en fonction du code d'identification.
